# EUROPEAN PATENT APPLICATION

(11) **EP 4 748 687 A1**
(43) Date of publication of application: **27.05.2026**
(21) Application number: 24842789.0
(22) Date of filing: 24.04.2024
(51) Int. Cl.: B62D 25/04, B21D 22/20, B21D 22/26, B21D 24/02

(54) **A-PILLAR UPPER OUTER, DOOR RING STRUCTURE, AND METHOD FOR MANUFACTURING DOOR RING STRUCTURE**

(30) Priority: 19.07.2023 JP 2023117553
(71) Applicant: Nippon Steel Corporation, Tokyo 100-8071 (JP)
(72) Inventor: IKEGAMI, Kenta, Tokyo 100-8071 (JP); KUBO, Masahiro, Tokyo 100-8071 (JP); YOSHIDA, Hiroshi, Tokyo 100-8071 (JP); SAITO, Masahiro, Tokyo 100-8071 (JP); ITO, Yasuhiro, Tokyo 100-8071 (JP); TANOUE, Hiroyuki, Tokyo 100-8071 (JP); SUZUKI, Junichiro, Tokyo 100-8071 (JP); YUASA, Susumu, Tokyo 100-8071 (JP)
(74) Representative: Zimmermann & Partner Patentanwälte mbB
(86) International application number: PCT/JP2024/016091
(87) International publication number: WO 2025/017989

(57) **Abstract**

An A-pillar upper outer (10, 10A, 10B, 10C, 10D) includes a pillar body (11). The pillar body (11) includes a top plate (111), ridge line portions (112, 113), vertical walls (114, 115), and flanges (116, 117). The pillar body (11) extends while forming a curve, where one ridge line portion (112), one vertical wall (114), and one flange (116) are located on an outer side of the curve, and the other ridge line portion (113), the other vertical wall (115), and the other flange (117) are located on an inner side of the curve. A bead (118) is formed in the top plate (111) in an area (R1) of 200 mm or more and 500 mm or less in a longitudinal direction from an end portion (11e) of the pillar body (11). The bead (118) has a shape recessed inward of the pillar body (11) and extends in the longitudinal direction of the pillar body (11).

## Description

### TECHNICAL FIELD

The present disclosure relates to an A-pillar upper outer for an automobile. Also, the present disclosure relates to a door ring structure for an automobile and a method of producing the same.

### BACKGROUND ART

A vehicle body of an automobile includes a plurality of frame members. Examples of the frame members include a bumper beam, A-pillars (front pillars), B-pillars (center pillars), C-pillars (rear pillars), side members, and rockers (side sills).

For example, Patent Literature 1 discloses a body side structural frame constituting a door opening of a vehicle body of an automobile. This body side structural frame includes, for example, an A-pillar section (A-pillar upper outer), a hinge pillar section (A-pillar lower outer), a B-pillar section (B-pillar outer), and a rocker outer. Patent Literature 1 states that the body side structural frame is produced by press-forming a composite blank, which is formed of a plurality of joined blanks.

### CITATION LIST

### PATENT LITERATURE

Patent Literature 1: JP 2021-528248A

### SUMMARY OF INVENTION

### TECHNICAL PROBLEM

In recent years, high-strength materials are frequently used for automobile frame members in order to ensure high collision resistance performance. The frame members are formed of a steel material having, for example, a tensile strength of 980 MPa or more. However, the ductility of steel material decreases as its strength increases. Thus, the higher the strength of the steel material forming the frame members, the more likely they are to break in the event of an automobile collision.

For example, in the body side structural frame of Patent Literature 1, a collision load in the longitudinal direction is applied to the A-pillar upper outer when the automobile undergoes a frontal collision. When this collision load deforms the A-pillar upper outer, tensile strain is concentrated in a part of the A-pillar upper outer. In the case where the A-pillar upper outer is formed of a high-strength material with low ductility, the A-pillar upper outer is likely to break at a portion where strain is concentrated. If the A-pillar upper outer breaks, the energy absorption performance of the A-pillar upper outer will be significantly reduced, and the benefits of the high-strength material cannot be utilized.

An object of the present disclosure is to provide an A-pillar upper outer that is less likely to break in the event of an automobile collision.

### SOLUTION TO PROBLEM

An A-pillar upper outer for an automobile according to the present disclosure includes a pillar body made of steel. The pillar body has a tensile strength of 980 MPa or more. The pillar body includes a top plate, a first vertical wall, a first flange, a second vertical wall, and a second flange. The first vertical wall is connected to the top plate via a first ridge line portion. The first flange is connected to the first vertical wall on the side opposite to the top plate. The second vertical wall is connected to the top plate via a second ridge line portion on the side opposite to the first vertical wall. The second flange is connected to the second vertical wall on the side opposite to the top plate. The pillar body extends while forming a curve, where the first ridge line portion, the first vertical wall, and the first flange are located on an outer side of the curve, and the second ridge line portion, the second vertical wall, and the second flange are located on an inner side of the curve. The top plate has a bead formed in an area of 200 mm or more and 500 mm or less in a longitudinal direction of the pillar body from an end portion of the pillar body that is located forward when the A-pillar upper outer is incorporated into a vehicle body of an automobile, out of two end portions of the pillar body in the longitudinal direction. The bead has a shape recessed inward of the pillar body and extends in the longitudinal direction.

### ADVANTAGEOUS EFFECTS OF INVENTION

According to the present disclosure, it is possible to make the A-pillar upper outer to be less likely to break in the event of an automobile collision.

### BRIEF DESCRIPTION OF DRAWINGS

[FIG. 1] FIG. 1 is a side view of a door ring structure according to a first embodiment.
[FIG. 2] FIG. 2 is a cross-sectional view of FIG. 1 taken along line II-II.
[FIG. 3A] FIG. 3A is a schematic view for illustrating a method for producing the door ring structure according to the first embodiment.
[FIG. 3B] FIG. 3B is a schematic view for illustrating the method for producing the door ring structure according to the first embodiment.
[FIG. 3C] FIG. 3C is a schematic view for illustrating the method for producing the door ring structure according to the first embodiment.
[FIG. 3D] FIG. 3D is a schematic view for illustrating the method for producing the door ring structure according to the first embodiment.
[FIG. 3E] FIG. 3E is a schematic view for illustrating the method for producing the door ring structure according to the first embodiment.
[FIG. 4] FIG. 4 is a side view of an A-pillar upper outer according to a second embodiment.
[FIG. 5] FIG. 5 is a transverse cross-sectional view of an A-pillar upper outer according to a third embodiment.
[FIG. 6] FIG. 6 is a transverse cross-sectional view of an A-pillar upper outer according to a fourth embodiment.
[FIG. 7] FIG. 7 is a transverse cross-sectional view of an A-pillar upper outer according to a fifth embodiment.
[FIG. 8A] FIG. 8A is a schematic view for illustrating a production method different from the method for producing the door ring structure according to the first embodiment.
[FIG. 8B] FIG. 8B is a schematic view for illustrating the production method different from the method for producing the door ring structure according to the first embodiment.
[FIG. 8C] FIG. 8C is a schematic view for illustrating the production method different from the method for producing the door ring structure according to the first embodiment.
[FIG. 9] FIG. 9 is a side view of a door ring structure according to a variation of the above embodiments.
[FIG. 10] FIG. 10 is a graph showing maximum values of equivalent plastic strain for each example and a comparative example.

### DESCRIPTION OF EMBODIMENTS

An A-pillar upper outer for an automobile according to an embodiment includes a pillar body made of steel. The pillar body has a tensile strength of 980 MPa or more. The pillar body includes a top plate, a first vertical wall, a first flange, a second vertical wall, and a second flange. The first vertical wall is connected to the top plate via a first ridge line portion. The first flange is connected to the first vertical wall on the side opposite to the top plate. The second vertical wall is connected to the top plate via a second ridge line portion on the side opposite to the first vertical wall. The second flange is connected to the second vertical wall on the side opposite to the top plate. The pillar body extends while forming a curve, where the first ridge line portion, the first vertical wall, and the first flange are located on an outer side of the curve, and the second ridge line portion, the second vertical wall, and the second flange are located on an inner side of the curve. The top plate has a bead formed in an area of 200 mm or more and 500 mm or less in a longitudinal direction of the pillar body from an end portion of the pillar body that is located forward when the A-pillar upper outer is incorporated into a vehicle body of an automobile, out of two end portions of the pillar body in the longitudinal direction. The bead has a shape recessed inward of the pillar body and extends in the longitudinal direction (first configuration).

The most part of an A-pillar upper outer is commonly curved to protrude upward in a side view of a vehicle body, and extends in the front-rear direction of the vehicle body. In other words, in the A-pillar upper outer, the pillar body extends while forming a curve, where the first ridge line portion, the first vertical wall, and the first flange are located on the outer side of the curve, and the second ridge line portion, the second vertical wall, and the second flange are located on an inner side of the curve. If an automobile having an A-pillar upper outer included in its vehicle body undergoes a frontal collision, particularly an offset frontal collision, a collision load is applied to a steel pillar body in its longitudinal direction. According to the investigations by the present inventors, in the event of an automobile collision, bending deformation is likely to occur in the second vertical wall on the inner side of the curve in an area of 200 mm or more and 500 mm or less in the longitudinal direction from a front end portion of the pillar body, and it is likely that tensile stress is generated and strain is concentrated in the second ridge line portion adjacent to the second vertical wall. In view of this, in the A-pillar upper outer according to the first configuration, the bead is formed on the top plate of the pillar body in the area of 200 mm or more and 500 mm or less in the longitudinal direction from the front end portion of the pillar body. By including the bead in the portion of the A-pillar upper outer where bending deformation is likely to occur, the cross-sectional line length of this portion is extended, thereby allowing the strain to be distributed at the portion. As a result, even when the pillar body is formed of a high-strength material having a tensile strength of 980 MPa or more, it is possible to make the A-pillar upper outer unlikely to break in the event of an automobile collision.

In the A-pillar upper outer according to the first configuration, the bead may have a depth of 3.0 times or more a sheet thickness of the top plate (second configuration).

In the second configuration, the top plate of the pillar body has a bead whose depth is 3.0 times or more the sheet thickness, in the area of 200 mm or more and 500 mm or less from the front end portion of the pillar body. Thus, the cross-sectional line length of the portion of the pillar body where deformation is likely to occur in the event of an automobile collision can be further extended. This can further make the A-pillar upper outer less unlikely to break.

Regarding the A-pillar upper outer according to the first or second configuration, it is preferable that, in a transverse cross-sectional view of the pillar body, a center of a bottom portion of the bead is located at a position shifted from a center of the top plate, in a width direction of the pillar body (third configuration).

For example, when the center position of the bottom portion of the bead is changed while the depth of the bead and the distance between both edges thereof are fixed in the transverse cross-section of the pillar body, the cross-sectional line length of the pillar body is more likely to be larger when the center of the bottom portion of the bead is shifted in the width direction from the center of the top plate, as in the third configuration, than when the center position of the bottom portion of the bead coincides with the center position of the top plate in the width direction of the pillar body. A longer cross-sectional line length of the pillar body allows the strain to be more easily distributed when the pillar body is deformed. This can further make the A-pillar upper outer less unlikely to break.

Regarding the A-pillar upper outer according to the third configuration, in a transverse cross-sectional view of the pillar body, the center of the bottom portion of the bead may be located on the second ridge line portion side with respect to the center of the top plate, in the width direction (fourth configuration).

In the fourth configuration, the center of the bottom portion of the bead is located on the second ridge line portion side with respect to the center of the top plate, i.e., further downward relative to the vehicle body than the center of the top plate, in the transverse cross-section of the pillar body. In this case, when the pillar body is deformed in the event of an automobile collision, the strain can be more easily distributed. This further makes it less likely for the A-pillar upper outer to break.

Regarding the A-pillar upper outer according to any one of the first to fourth configurations, it is preferable that, in a transverse cross-sectional view of the pillar body, the bead has a shape asymmetric with respect to a center line of the bead in the width direction of the pillar body (fifth configuration).

In the fifth configuration, the bead has an asymmetric shape with respect to the center line in the width direction in the transverse cross-sectional view of the pillar body. In this case, the cross-sectional line length of the pillar body can be increased compared to the case where the bead is symmetric with respect to the center line in the width direction. As a result, when the pillar body is deformed, the strain can be more easily distributed, making the A-pillar upper outer less likely to break.

In the A-pillar upper outer according to any one of the first to fifth configurations, the second vertical wall may have at least one step in the area of 200 mm or more and 500 mm or less in the longitudinal direction from the end portion of the pillar body (sixth configuration).

According to the sixth configuration, the second vertical wall has a step provided in the area of 200 mm or more and 500 mm or less in the longitudinal direction from the front end portion of the pillar body. Thus, the cross-sectional line length is further extended in a portion of the pillar body where deformation is likely to occur, allowing the strain to be more easily distributed. Accordingly, it is possible to make the A-pillar upper outer less likely to break in the event of an automobile collision.

A door ring structure for an automobile according to an embodiment includes the A-pillar upper outer according to any one of the first to sixth configurations (seventh configuration).

In a production method according to an embodiment, the door ring structure according to the seventh configuration is produced. The production method includes: a preparation step of preparing a blank having an annular shape in a plan view; a heating step of heating the blank to an austenite transformation finish temperature or higher; and a forming step of forming the heated blank into a door ring structure using a die assembly, and performing quenching. The die assembly includes a punch, a die, and a pad. A portion of the punch for forming the pillar body includes a punch body and a cushion. The cushion faces the pad and is disposed such that it can be received within the punch body. In the forming step, a bead is formed in the blank by holding a portion of the blank that is to be formed into the top plate between the pad and the cushion, and thereafter the blank can be pressed by the punch body and the die, with the blank held between the pad and the cushion (eighth configuration).

In a production method according to another embodiment, the door ring structure according to the seventh configuration is produced. The production method includes: a preparation step of preparing a blank having an annular shape in a plan view; a heating step of heating the blank to an austenite transformation finish temperature or higher; and a forming step of forming the heated blank into a door ring structure using a die assembly, and performing quenching. The die assembly includes a punch, a die, and a pad. In the forming step, a bead is formed in the blank by holding a portion of the blank that is to be formed into the top plate between the pad and the punch, and the blank is pressed by the punch and the die to form the first vertical wall, the second vertical wall, the first flange, and the second flange (ninth configuration).

In order to simplify the process of producing the door ring structure, it is conceivable to integrally form a plurality of frame members including the A-pillar upper outer from the blank stage. However, when a relatively large-sized door ring structure is formed from an annular blank, its dimensional accuracy of the door ring structure may not be ensured. In particular, when producing the door ring structure by means of hot stamping, the dimensional accuracy of the door ring structure may be degraded. More specifically, during hot stamping, the annular blank is heated to the austenite transformation finish temperature or higher, and thereafter the heated blank is formed into the door ring structure using the die assembly and quenched. The door ring structure is brought into contact with the die assembly and subjected to heat removal (rapid cooling), and its microstructure is thereby transformed from austenite to martensite. At this time, if the cooling rate of the door ring structure is sufficiently ensured, a martensite single-phase structure is obtained. However, if the cooling rate is insufficient, ferrite will precipitate in addition to martensite.

In the production of a door ring structure by hot stamping, stress is released during phase transformation from austenite to martensite, and spring-back is less likely to occur. However, if, for example, the cooling rate is insufficient in a part of the door ring structure and ferrite precipitates, stress will not be sufficiently released in that part, which may result in spring-back. Since the door ring structure is large-sized and has an annular shape, even a slight spring-back occurring in one part may significantly affect the dimensional accuracy of the entire door ring structure. For example, in the case of the A-pillar upper outer, residual stress in the top plate may cause spring-back in the pillar body and result in torsion in the door ring structure.

In the production method according to the eighth configuration, when the annular blank is formed into the door ring structure, a portion of the blank that is to become the top plate of the pillar body is first held between the pad and the cushion at the position of the A-pillar upper outer. That is, the top plate of the pillar body comes into contact with the pad and the cushion from the initial forming stage to ensure the cooling rate. Therefore, the microstructure of the top plate of the pillar body is likely to become a single-phase martensite structure, and stress is easily released. This can reduce spring-back of the pillar body, making it easier to suppress torsion of the door ring structure. Thus, the production method according to the eighth configuration can improve the dimensional accuracy of the door ring structure.

In the production method according to the eighth and ninth configurations, the door ring structure that includes the A-pillar upper outer is produced by hot stamping. As a result, the strength of the A-pillar upper outer can be increased (tensile strength: 980 MPa or more), and a relatively deep bead can be formed in its top plate. For example, even if the cross-sectional shape of the bead is not uniform in the longitudinal direction of the A-pillar upper outer, and it is difficult to form the bead by simple bending, a relatively deep bead can be formed in the top plate of the A-pillar upper outer while suppressing cracking by utilizing hot stamping.

Embodiments of the present disclosure will now be described with reference to the drawings. In the drawings, the same or equivalent components are assigned the same reference numerals, and the same description is not repeated.

### <First Embodiment>

### [Door ring structure]

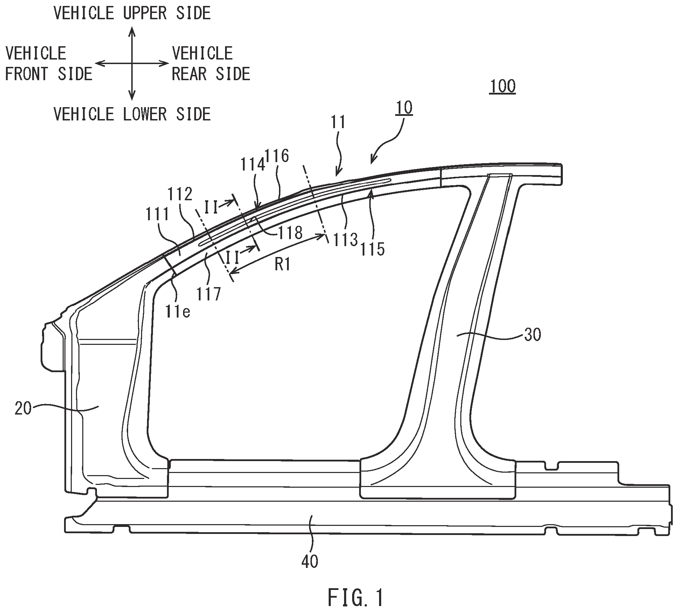

FIG. 1 is a diagram showing a schematic configuration of a door ring structure 100 according to the present embodiment. The door ring structure 100 is for use in an automobile. The door ring structure 100 is to be incorporated into a vehicle body of an automobile. FIG. 1 shows the door ring structure 100 as viewed from the side (left side) of the automobile when incorporated into the vehicle body of the automobile. In the following description of the present embodiment, the front, rear, left, and right sides of the door ring structure 100 and frame members included therein correspond respectively to the front, rear, left, and right sides of the automobile with the door ring structure 100 incorporated into its vehicle body.

Referring to FIG. 1, the door ring structure 100 has an annular shape in a side view. The door ring structure 100 is joined to another door ring structure that is not shown in FIG. 1, from an outer side with respect to the left-right direction of the vehicle body. That is, the door ring structure 100 is an outer door ring structure. The door ring structure 100 includes an A-pillar upper outer 10, an A-pillar lower outer 20, a B-pillar outer 30, and a rocker outer 40.

The A-pillar lower outer 20 is disposed forward of and below the A-pillar upper outer 10, and is joined to the A-pillar upper outer 10. The B-pillar outer 30 is joined to a rear part of the A-pillar upper outer 10 and extends downward from the A-pillar upper outer 10. The rocker outer 40 is joined to lower end parts of the A-pillar lower outer 20 and the B-pillar outer 30, and extends in the front-rear direction.

The size of the door ring structure 100 which has an annular shape in a side view is 1.0 m or more, for example. The size of the door ring structure 100 may be, for example, 4.0 m or less. The size of the door ring structure 100 refers to the length of a line segment connecting two points on the outer periphery of the door ring structure 100 that are separated by the longest distance as viewed along the vertical direction when the door ring structure 100 is placed on a horizontal plane.

Referring again to FIG. 1, the A-pillar upper outer 10 has a pillar body 11. The pillar body 11 has an elongated shape and extends substantially in the front-rear direction when the A-pillar upper outer 10 is incorporated into the vehicle body of the automobile. The pillar body 11 is made of steel. The pillar body 11 is formed of one or more steel sheets. The pillar body 11 has a tensile strength of 980 MPa or more, preferably 1470 MPa or more, and more preferably 1760 MPa or more. The tensile strength of the pillar body 11 can be obtained by taking a test piece from a relatively flat part of the pillar body 11 and performing a tensile test on the test piece according to JIS Z 2241:2022.

The pillar body 11 includes a top plate 111, ridge line portions 112 and 113, vertical walls 114 and 115, and flanges 116 and 117.

The top plate 111 extends in the longitudinal direction of the pillar body 11. The ridge line portions 112 and 113, the vertical walls 114 and 115, and the flanges 116 and 117 also extend in the longitudinal direction of the pillar body 11. The vertical wall 114 is connected to the top plate 111 via the ridge line portion 112. The flange 116 is connected to the vertical wall 114 on the side opposite to the top plate 111. The vertical wall 115 is connected to the top plate 111 via the ridge line portion 113 on the side opposite to the vertical wall 114. The flange 117 is connected to the vertical wall 115 on the side opposite to the top plate 111.

The pillar body 11 extends while forming a curve, where one ridge line portion 112, one vertical wall 114, and one flange 116 are located on the outer side of the curve, and the other ridge line portion 113, the other vertical wall 115, and the other flange 117 are located on the inner side of the curve. That is, in a side view of the A-pillar upper outer 10, the pillar body 11 extends from the front to the rear and curves to protrude upward as a whole.

The curvature radius of the pillar body 11 is, for example, 800 mm or more. The curvature radius of the pillar body 11 may be 10000 mm or less. The curvature radius of the pillar body 11 can be obtained by arranging measurement points at 40-mm intervals rearward from a front end portion 11e of the pillar body 11 along a free end of the flange 117 that is located on the inner side of the curve, i.e., further downward relative to the vehicle body of the automobile, and sequentially measuring the curvature radius of an arc passing through three adjacent measurement points while shifting the measurement points one at a time. The curvature radius of the pillar body 11 typically varies along the longitudinal direction of the pillar body 11. Note that the pillar body 11 may have a substantially constant curvature radius over its entire length.

The top plate 111 of the pillar body 11 has a bead 118 formed at least in an area R1. The area R1 is an area of 200 mm or more and 500 mm or less in the longitudinal direction of the pillar body 11 from an end portion (front end portion) 11e located forward when the A-pillar upper outer 10 is incorporated into the vehicle body of the automobile, out of the two end portions of the pillar body 11 in the longitudinal direction. More specifically, the area R1 is defined based on the free end of the flange 117 located on the inner side of the curve of the pillar body 11 (i.e., on the lower side relative to the vehicle body), and refers to an area of 200 mm or more and 500 mm or less rearward along the free end of the flange 117 from the front end portion 11e of the pillar body 11. The free end of the flange 117 extends in the front-rear direction while forming a curve protruding upward in a side view of the A-pillar upper outer 10.

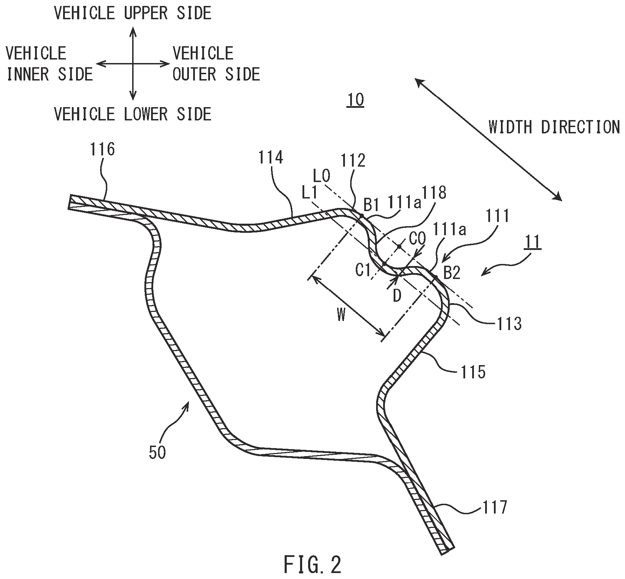

FIG. 2 is a transverse cross-sectional view of the pillar body 11 (a cross-sectional view of FIG. 1 taken along line II-II). A transverse cross-section of the pillar body 11 is a cross-section of the pillar body 11 cut along a plane substantially perpendicular to the extension direction of the free end of the flange 117. FIG. 2 shows an A-pillar upper inner 50 in addition to the pillar body 11 of the A-pillar upper outer 10.

Referring to FIG. 2, the A-pillar upper outer 10 forms a closed cross-section together with the A-pillar upper inner 50. The pillar body 11 of the A-pillar upper outer 10 has a substantially hat-like shape in the transverse cross-sectional view. In the transverse cross-section of the pillar body 11, the ridge line portions 112 and 113 are arranged adjacent to each other on the respective sides of the top plate 111, and each have a curved shape protruding on the outer side of the pillar body 11. The vertical walls 114 and 115 are continuous with the respectively ridge line portions 112 and 113, and extend from the ridge line portions 112 and 113 toward the respective sides opposite to the top plate 111 in the transverse cross-sectional view of the pillar body 11. The flanges 116 and 117 protrude from the respective vertical walls 114 and 115 outward of the pillar body 11. The flanges 116 and 117 are joined to the A-pillar upper inner 50 by, for example, spot welding. That is, an opening between the vertical walls 114 and 115 of the A-pillar upper outer 10 is closed by the A-pillar upper inner 50.

The top plate 111 of the pillar body 11 of the A-pillar upper outer 10 includes a bead 118 in the area R1 (FIG. 1). The bead 118 has a shape recessed from the top plate 111 inward of the pillar body 11. The bead 118 extends in the longitudinal direction of the pillar body 11 over at least the entire area R1. That is, the bead 118 has a length longer than or equal to the area R1 in the longitudinal direction of the pillar body 11. The bead 118 may be provided only within the area R1, but may extend in the longitudinal direction of the pillar body 11 beyond the area R1.

In the transverse cross-section of the pillar body 11, when the width direction of the pillar body 11 is the extension direction of a straight line L0 connecting a boundary B1 between the top plate 111 and one ridge line portion 112 and a boundary B2 between the top plate 111 and the other ridge line portion 113, the width of the opening of the bead 118 is smaller than the width W of the top plate 111 (i.e., the straight-line distance between the boundaries B1 and B2). Thus, the top plate 111 has flat portions 111a in a part between the bead 118 and the ridge line portion 112 and a part between the bead 118 and the ridge line portion 113. The flat portions 111a are portions of the top plate 111 that are disposed on the straight line L0 and extend substantially along the straight line L0, in the transverse cross-section of the pillar body 11. The top plate 111 may have, for example, a width W of 15 mm or more and 300 mm or less.

The bead 118 preferably has a depth D that is 3.0 times or more the sheet thickness t of the top plate 111. At least within the area R1 (FIG. 1), preferably, the depth D of the bead 118 is ensured to be 3.0 times or more the sheet thickness t of the top plate 111, more preferably 5.0 times or more the sheet thickness t. The depth D of the bead 118 may be 15.0 times or less the sheet thickness t of the top plate 111. The depth D of the bead 118 is the shortest distance from the straight line L0 connecting the boundaries B1 and B2 to a straight line L1 parallel to the straight line L0 and in contact with the bottom portion of the bead 118 in the transverse cross-section of the pillar body 11. The boundaries B1 and B2 are R stops on the top plate 111 side of the respectively ridge line portions 112 and 113 on the outer surface of the pillar body 11. The straight line L1 is in contact with the bottom portion of the bead 118 on the outer surface of the pillar body 11. The sheet thickness t of the top plate 111 is, for example, a sheet thickness measured at the position of the flat portion 111a. The sheet thickness t is, for example, 0.8 mm or more. The sheet thickness t may be 2.0 mm or less. The depth D may be constant or non-constant over the entire length of the bead 118 extending in the longitudinal direction of the pillar body 11. For example, when the bead 118 extends beyond the area R1 in the longitudinal direction of the pillar body 11, the depth D of the bead 118 may be smaller outside the area R1 than inside the area R1.

In the present embodiment, in the transverse cross-sectional view of the pillar body 11, the position of the center C1 of the bottom portion (bottom center) of the bead 118 coincides with the position of the center (width center) C0 of the top plate 111 in the width direction of the pillar body 11. In the present embodiment, in the transverse cross-sectional view of the pillar body 11, the position of the center (width center) of the bead 118 itself also coincides substantially with the position of the width center C0 of the top plate 111 in the width direction of the pillar body 11. The bead 118 is a portion of the top plate 111 that is located on the inner side of the pillar body 11 relative to the straight line LO, and the width center of the bead 118 is the center position of this portion in the width direction. The width center C0 of the top plate 111 is a point located on the straight line L0 connecting the boundaries B1 and B2, and is an intermediate point between the boundaries B1 and B2. The bottom center C1 of the bead 118 is a center point in the width direction of a portion of the straight line L1 that is in contact with the bottom portion of the bead 118 on the outer surface of the pillar body 11. In the transverse cross-section of the pillar body 11, when the straight line L1 is in point contact with the bottom portion of the bead 118 on the outer surface of the pillar body 11, the contact point between the bottom portion of the bead 118 and the straight line L1 is the bottom center C1 of the bead 118. In the present embodiment, in a transverse cross-sectional view of the pillar body 11, the bead 118 has a substantially symmetric shape with respect to a width center line of the top plate 111 (a straight line passing through the width center C0 and perpendicular to the straight line L0).

### [Method for producing door ring structure]

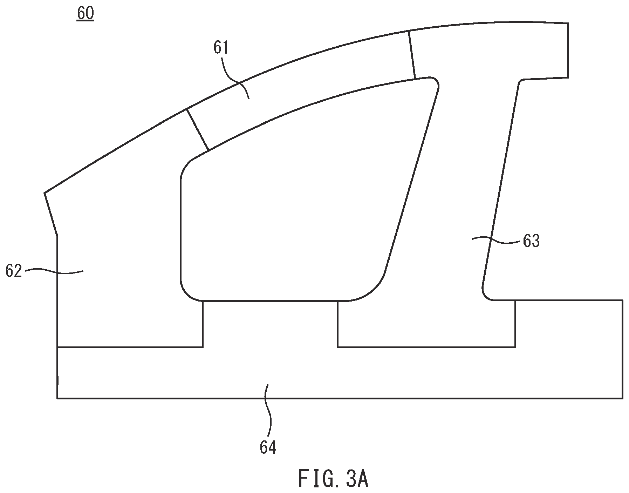

A method for producing the door ring structure 100 will be described below with reference to FIGS. 3A to 3E. The method for producing the door ring structure 100 according to the present embodiment includes a step for preparing a blank 60, a step for heating the blank 60, and a step for forming the blank 60.

### (Preparing step)

In the preparation step, a blank 60 having an annular shape in a plan view is prepared, as shown in FIG. 3A. The blank 60 has a shape obtained by expanding the annular door ring structure 100. In the example of the present embodiment, the blank 60 includes a plurality of steel sheets 61, 62, 63, and 64. The steel sheets 61, 62, 63, and 64 are arranged and joined to form an annular shape in a plan view of the blank 60. The steel sheets 61, 62, 63, and 64 are butt-joined to the other adjacent steel sheets by, for example, laser welding. Alternatively, the steel sheets 61, 62, 63, and 64 may be overlap-joined to the other adjacent steel sheets by, for example, spot welding. The method of joining the steel sheets 61, 62, 63, and 64 is not specifically limited.

In the example shown in FIG. 3A, the steel sheet 61 is disposed in a region that is to be the A-pillar upper outer 10 (FIG. 1), in the blank 60. The steel sheets 62, 63, and 64 are disposed in regions that are to be the A-pillar lower outer 20, the B-pillar outer 30, and the rocker outer 40 (FIG. 1), respectively, in the blank 60. The thicknesses of the steel sheets 61, 62, 63, and 64 may be the same or different. The tensile strengths of the steel sheets 61, 62, 63, and 64 in the state of the blank 60 may be the same or different. The steel sheets 61, 62, 63, and 64 may be plated steel sheets having an aluminum-based or zinc-based plating layers on their surfaces, or may be bare steel sheets having no plating layer.

### (Heating step)

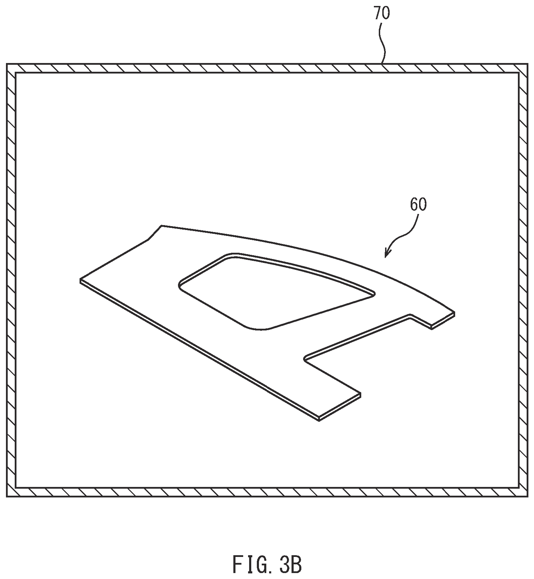

The prepared blank 60 is formed into the door ring structure 100 (FIG. 1) by hot stamping (hot pressing). During hot stamping, the blank 60 is subjected to a heating step. Referring to FIG. 3B, in the heating step, the blank 60 is heated by, for example, a heating furnace 70. The blank 60 is heated to the austenite transformation finish temperature (A_{c3} point) or higher. The blank 60 is heated, for example, to 900°C or higher. Thus, the microstructures in the steel sheets 61, 62, 63, and 64 (FIG. 3A) included in the blank 60 are transformed into an austenitic phase.

### (Forming step)

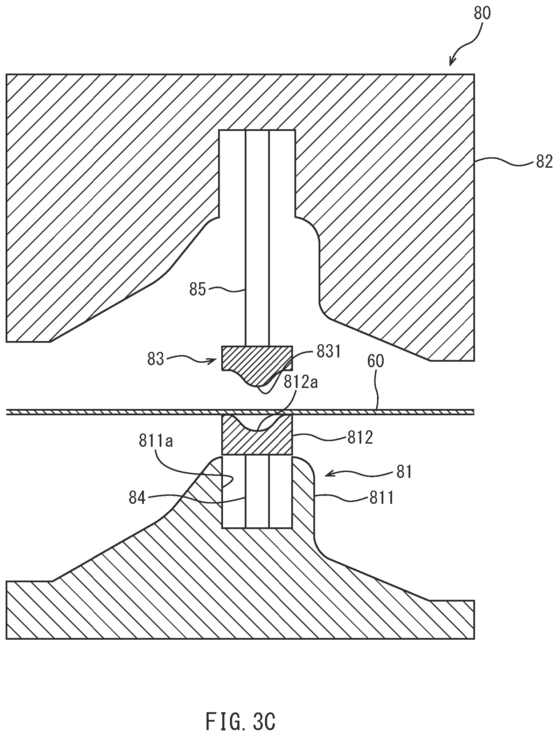

Referring to FIG. 3C, in the forming step, the heated blank 60 is formed into the door ring structure 100 (FIG. 1) having an annular shape in a plan view and quenched, using a die assembly 80. The blank 60 that has been heated in the heating step is removed from the heating furnace 70 (FIG. 3B) and carried to the die assembly 80. The die assembly 80 is mounted on a known press device. The die assembly 80 includes a punch 81, a die 82, and a pad 83.

First, a specific configuration of the die assembly 80 used in the forming step is described. FIG. 3C is a transverse cross-sectional view of a part of the die assembly 80 corresponding to the pillar body 11 (FIGS. 1 and 2 ) of the A-pillar upper outer 10. FIG. 3C shows a transverse cross-section of the die assembly 80 in an area for forming the bead 118 in the top plate 111 of the pillar body 11 shown in FIGS. 1 and 2.

As shown in FIG. 3C, the portion of the punch 81 for forming the pillar body 11 includes a punch body 811 and a cushion 812 disposed such that it can be received within the punch body 811. The punch body 811 has a recessed receiving portion 811a on its top surface. The cushion 812 is supported, for example, by a bottom surface of the receiving portion 811a via an elastic member 84. The elastic member 84 is a member capable of stretching and contracting in the pressing direction. For example, a gas spring or the like may be used as the elastic member 84. When the elastic member 84 is stretched, the top surface of the cushion 812 projects from the top surface of the punch body 811. When the elastic member 84 is contracted, the cushion 812 is received in the receiving portion 811a of the punch body 811 such that the top surface of the cushion 812 is substantially flush with the top surface of the punch body 811.

The die 82 is arranged to face the punch 81 in the pressing direction. The pad 83 is arranged to face the cushion 812 in the pressing direction. The pad 83 is supported by the die 82 or a slide or the like of the press device via an elastic member 85. The elastic member 85 is a member capable of stretching and contracting in the pressing direction. For example, a gas spring or the like may be used as the elastic member 85.

A recess 812a for forming the bead 118 (FIG. 2) is formed in a surface of the cushion 812 of the punch 81 that faces the pad 83. A protrusion 831 is formed in a surface of the pad 83 that faces the cushion 812, in correspondence with the recess 812a of the cushion 812.

Next, press forming of the blank 60 using the die assembly 80 is described. Referring again to FIG. 3C, before the start of press forming, the elastic member 84 is stretched, and the cushion 812 of the punch 81 projects from the punch body 811 toward the pad 83. Also, the elastic member 85 is stretched, and at least the surface of the pad 83 that faces the cushion 812 is positioned on the punch 81 side with respect to the die 82. The blank 60 that has been heated in the heating step is arranged between the punch 81 and the die 82 and pad 83. The blank 60 may be placed on the cushion 812, for example.

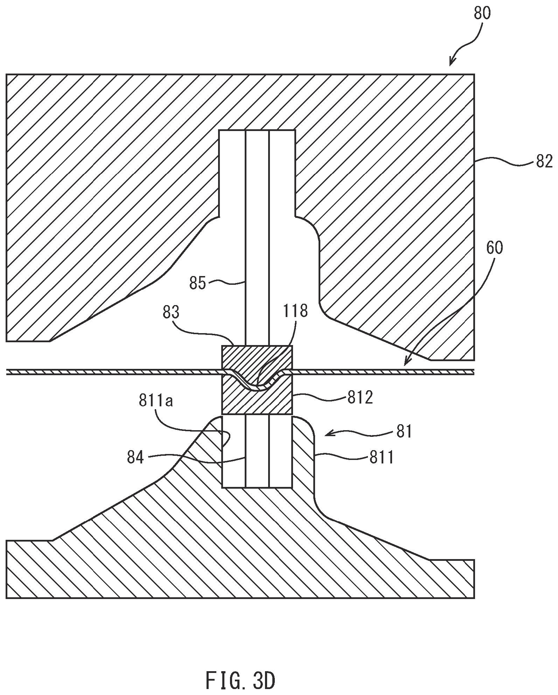

Referring to FIG. 3D, after arranging the blank 60 between the punch 81 and the die 82 and pad 83, the die 82 and the pad 83 are moved relative to the punch 81 in the pressing direction to bring the die 82 and the pad 83 close to the punch 81. Consequently, first, the blank 60 is held between the pad 83 and the cushion 812 of the punch 81. More specifically, the portion of the blank 60 that is to be formed into the top plate 111 (FIGS. 1 and 2) of the pillar body 11 is held between the pad 83 and the cushion 812 to form the bead 118.

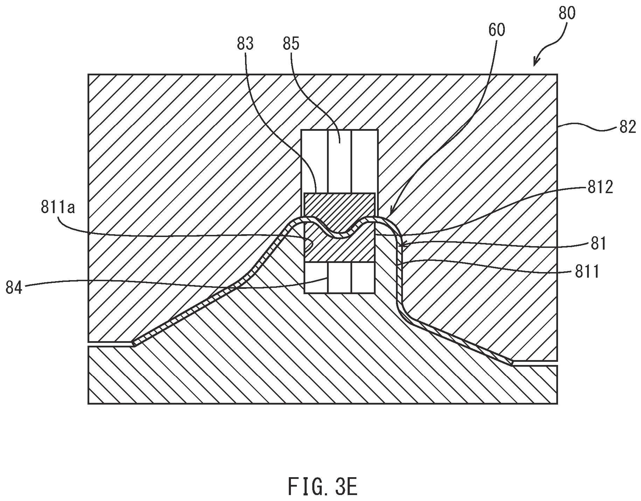

Thereafter, as shown in FIG. 3E, the blank 60 is pressed by the punch body 811 and the die 82 while being held between the pad 83 and the cushion 812. More specifically, after the blank 60 is held between the pad 83 and the cushion 812, the die 82 and the pad 83 are brought closer relative to the punch 81 in the pressing direction in this state. Thus, the elastic member 84 contracts, and the cushion 812 is received in the receiving portion 811a of the punch body 811. Furthermore, the elastic member 85 contracts, and the die 82 moves toward the punch 81 relative to the pad 83. Then, the blank 60 is pressed by the punch body 811 and the die 82, and is formed into a shape conforming to the forming surfaces of the punch 81, the die 82, and the pad 83. The blank 60 is held in a state sandwiched between the punch 81 and the die 82 and pad 83. The blank 60 is subjected to heat removal (rapid cooling) by the die assembly 80, and its microstructure is transformed into martensite.

Although not shown, portions of the door ring structure 100 other than the A-pillar upper outer 10 are also formed by the die assembly 80 including the punch 81, the die 82, and the pad 83. However, the punch 81 need not be provided with the cushion 812 at portions where the bead 118 is not present in the top plate 111 in the A-pillar upper outer 10 and at positions where the other frame members 20, 30, and 40 are formed. That is, as for the parts of the die assembly 80 where no bead needs to be formed in the top plates of the framework members, forming may be performed using a punch that is not divided into a punch body and a cushion (a common block-shaped punch).

### [Effect]

The A-pillar upper outer 10 according to the present embodiment forms a closed cross-section together with the A-pillar upper inner 50 when incorporated into a vehicle body of an automobile. Further, the pillar body 11 of the A-pillar upper outer 10 is entirely curved when viewed from the side of the vehicle body. Such an A-pillar upper outer 10 is likely to undergo bending deformation in the area R1 of 200 mm or more and 500 mm or less rearward from the front end portion 11e of the pillar body 11 in the event of an automobile collision. However, in the present embodiment, the bead 118 is formed in the top plate 111 of the pillar body 11 over the entire area R1, and the cross-sectional line length of the pillar body 11 is large at least in the area R1. Thus, in the area R1 where the pillar body 11 is likely to undergo bending deformation resulting from a collision, tensile strain generated by the bending deformation can be distributed. Accordingly, even if the tensile strength of the pillar body 11 is 980 MPa or more, it is possible to make the A-pillar upper outer 10 less likely to break in the event of an automobile collision.

In the A-pillar upper outer 10 according to the present embodiment, the depth D of the bead 118 is preferably 3.0 times or more the sheet thickness t of the top plate 111 in the area R1 of 200 mm or more and 500 mm or less rearward from the front end portion 11e of the pillar body 11. Thus, the cross-sectional line length of the pillar body 11 can be further increased in the area R1 where bending deformation is likely to occur due to a collision. Accordingly, it is possible to make the A-pillar upper outer 10 less likely to break in the event of an automobile collision. If the depth D is excessively large, it will be difficult to form the bead 118. Therefore, the depth D is preferably 15.0 times or less the sheet thickness t of the top plate 111.

In the present embodiment, when forming the door ring structure 100 including the A-pillar upper outer 10, the A-pillar lower outer 20, the B-pillar outer 30, and the rocker outer 40 from the annular blank 60, the top plate 111 of the pillar body 11 is held by the pad 83 and the cushion 812 provided in the punch 81 at the position of the A-pillar upper outer 10. That is, the top plate 111 of the pillar body 11 comes into contact with the pad 83 and the cushion 812 from the initial stage of forming. This ensures the cooling rate of the top plate 111, thereby causing the microstructure of the top plate 111 to easily become a single-phase martensite structure and allowing stress in the top plate 111 to be easily released. Thus, spring-back of the pillar body 11 can be reduced, and torsion of the door ring structure 100 caused by the spring-back can be suppressed. Accordingly, dimensional accuracy of the door ring structure 100 can be improved.

In the present embodiment, the A-pillar upper outer 10 is formed by hot stamping. That is, the A-pillar upper outer 10 is a hot-stamped member. Therefore, the pillar body 11 of the A-pillar upper outer 10 contains a martensite phase in its microstructure. For example, the martensite fraction may be 80% or more in a cross-section of the pillar body 11. The martensite fraction is preferably 85% or more, and more preferably 90% or more. The martensite fraction can be measured as follows. That is, 10 or more analysis samples (e.g., with a long-side size of about 10 mm) are cut out from positions that are 20 mm or more away from the leading ends of the flanges 116 and 117 and 10 mm or more away from each other, on a cross-section at a random location on the pillar body 11. Thereafter, each sample is polished and etched with LePera etchant such that an observation surface is a surface along the sheet thickness direction. Thereafter, the analysis samples are observed at a position one-fourth of the sheet thickness away from the surface, in the sheet thickness direction, using an electron microscope at a magnification of 1000, and optical micrographs are obtained. Image analysis can be performed on the obtained optical micrographs using, for example, commercially available image analysis software (Photoshop CS5 manufactured by Adobe), and the proportion of the martensite area can be obtained as the martensite fraction.

As an image analysis method, a maximum brightness value Lmax and a minimum brightness value Lmin are obtained from each image, a portion having pixels whose brightness ranges from Lmax-0.3 (Lmax-Lmin) to Lmax is defined as a white region, and the proportion of pixels in the white region to the total number of pixels is calculated to measure the martensite fraction. Such image analysis is performed for a total of 10 observation fields of each analysis sample to obtain the martensite fraction, and an average value of thus-obtained martensite fractions is used as the martensite fraction of the pillar body 11 of the A-pillar upper outer 10.

In the case of producing a high-strength A-pillar upper outer 10 having a curved shape by cold forming, it is difficult to form a deep bead 118 in the top plate 111 of the pillar body 11. Particularly, cold forming tends to cause a crack in the bead 118 when it is difficult to form the bead 118 by simple bending, specifically, when the cross-sectional shape of the bead 118 is not uniform over the entire length of the pillar body 11, e.g., when the depth D is reduced on both end sides in the extension direction of the bead 118. In this respect, the A-pillar upper outer 10 in the present embodiment is formed by hot stamping. This makes it possible to provide the pillar body 11 with high strength (tensile strength: 980 MPa or more) and to form a bead 118 having a depth D that is, for example, 3.0 times or more the sheet thickness t in the top plate 111.

### <Second Embodiment>

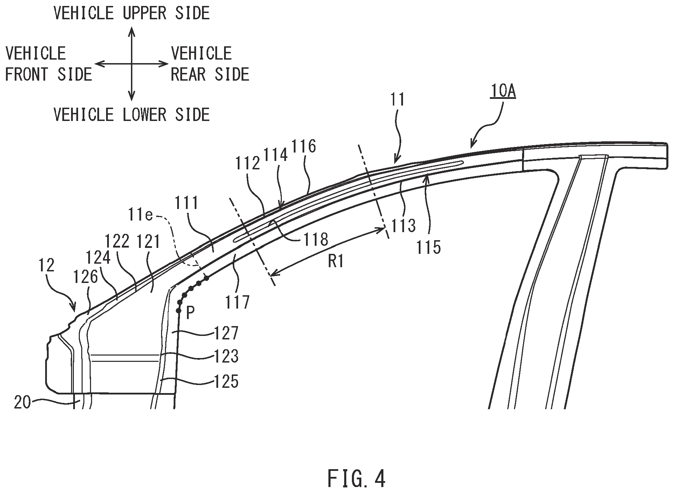

FIG. 4 is a side view of an A-pillar upper outer 10A according to the second embodiment. The A-pillar upper outer 10A according to the present embodiment includes a transition portion 12 in addition to the pillar body 11, and is different from the A-pillar upper outer 10A according to the first embodiment on this point.

The transition portion 12 is a portion of the door ring structure 100 (FIG. 1) that corresponds to a transition from the A-pillar upper outer 10A to the A-pillar lower outer 20. As shown in FIG. 4, the transition portion 12 is disposed adjacent to the front end portion 11e of the pillar body 11. The transition portion 12 includes a top plate 121, ridge line portions 122 and 123, vertical walls 124 and 125, and flanges 126 and 127. The top plate 121 is continuous with the top plate 111 of the pillar body 11. The ridge line portion 122, the vertical wall 124, and the flange 126 are continuous with the ridge line portion 112, the vertical wall 114, and the flange 116, respectively, that are located on the outer side of the curve of the pillar body 11. The ridge line portion 123, the vertical wall 125, and the flange 127 are continuous with the ridge line portion 113, the vertical wall 115, and the flange 117, respectively, that are located on the inner side of the curve of the pillar body 11.

In the A-pillar upper outer 10A that includes the transition portion 12, which is integrated with the pillar body 11, the front end portion 11e of the pillar body 11 can be determined as follows. That is, on the lower side of the A-pillar upper outer 10A relative to the vehicle body, measurement points P are arranged along a free end of the flange 127 of the transition portion 12 and the free end of the flange 117 of the pillar body 11 at 40-mm intervals from an end portion of the flange 127 of the transition portion 12. The curvature radius of an arc passing through a reference measurement point and measurement points on both sides of it is sequentially measured while shifting the reference measurement point one at a time toward the pillar body 11. The position of the reference measurement point when the curvature radius changes from 800 mm or less to more than 800 mm is defined as the front end portion 11e of the pillar body 11. As can be understood from FIG. 4, the free end of the flange 127 of the transition portion 12 extends generally in the up-down direction at positions separated from the pillar body 11, but bends rearward in the vicinity of the pillar body 11. That is, the free end of the flange 127 of the transition portion 12 has a relatively small curvature radius in the vicinity of the pillar body 11. Thus, the curvature radius switches from 800 mm or less to more than 800 mm at a boundary between the transition portion 12 and the pillar body 11. The switching point of the curvature radius serves as the front end portion 11e of the pillar body 11.

In the present embodiment, similar to the first embodiment, the bead 118 is formed in the top plate 111 of the pillar body 11 in the area R1 of 200 mm or more and 500 mm or less in the longitudinal direction from the front end portion 11e of the pillar body 11. Accordingly, the A-pillar upper outer 10A according to the present embodiment can also exhibit the same effect as the A-pillar upper outer 10 according to the first embodiment.

### <Third Embodiment>

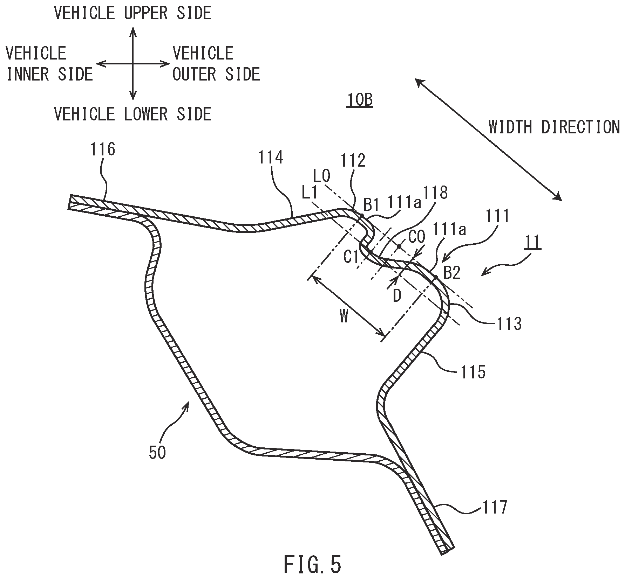

FIG. 5 is a transverse cross-sectional view of the pillar body 11 of an A-pillar upper outer 10B according to the third embodiment. In the present embodiment as well, the bead 118 is formed in the top plate 111 of the pillar body 11 at least in the area R1 (FIGS. 1 and 4) of 200 mm or more and 500 mm or less in the longitudinal direction from the front end portion 11e of the pillar body 11.

In the A-pillar upper outer 10 according to the first embodiment, in the transverse cross-sectional view of the pillar body 11, the position of the bottom center C1 of the bead 118 coincides with the position of the width center C0 of the top plate 111 in the width direction of the pillar body 11 (FIG. 2). In the transverse cross-sectional view of the pillar body 11 in the first embodiment, the bead 118 has a shape that is substantially symmetric with respect to the center line of the bead 118 in the width direction of the pillar body 11. In contrast, in the transverse cross-sectional view of the pillar body 11 of the A-pillar upper outer 10B according to the present embodiment, the bead 118 has an asymmetric shape with respect to the center line (width center line) of the bead 118 in the width direction of the pillar body 11. The width center line of the bead 118 is a straight line passing through the width center of the bead 118 in the transverse cross-sectional view of the pillar body 11 and perpendicular to the straight line L0. In the width direction of the pillar body 11, the bottom center C1 of the bead 118 is located on the ridge line portion 112 side, which is the outer side of the curve, relative to the width center C0 of the top plate 111. The bottom center C1 of the bead 118 is preferably shifted in the width direction by 10% or more of the width W of the top plate 111 from the width center C0 of the top plate 111. In the example shown in FIG. 5, the position of the width center of the bead 118 substantially coincides with the position of the width center C0 of the top plate 111 in the width direction of the pillar body 11. Thus, the bead 118 has a shape that is also asymmetric with respect to the width center line of the top plate 111 (a straight line passing through the width center C0 and perpendicular to the straight line L1) in the transverse cross-sectional view of the pillar body 11. However, the position of the width center of the bead 118 need not necessarily coincide with the position of the width center C0 of the top plate 111 in the width direction of the pillar body 11. The depth D and length of the bead 118 can be set in the same manner as in the first embodiment.

The A-pillar upper outer 10B according to the present embodiment can also exhibit the same effect as the A-pillar upper outers 10 and 10A according to the other embodiments. Particularly, in a transverse cross-sectional view of the pillar body 11 in the present embodiment, the center C1 of the bottom portion of the bead 118 is located at a position shifted from the center C0 of the top plate 111 in the width direction of the pillar body 11. More specifically, the bead 118 is provided on the top plate 111 so as to be asymmetric with respect to the width center line thereof in a transverse cross-sectional view of the pillar body 11. In this case, the cross-sectional line length of the bead 118 is more likely to be extended than when the position of the bottom center C1 of the bead 118 coincides with the position of the width center C0 of the top plate 111. That is, the cross-sectional line length of the pillar body 11 in the region where the bead 118 is provided is larger. This allows strain to be more easily distributed in the pillar body 11 in the event of an automobile collision, and further makes the A-pillar upper outer 10B less likely to break.

### <Fourth Embodiment>

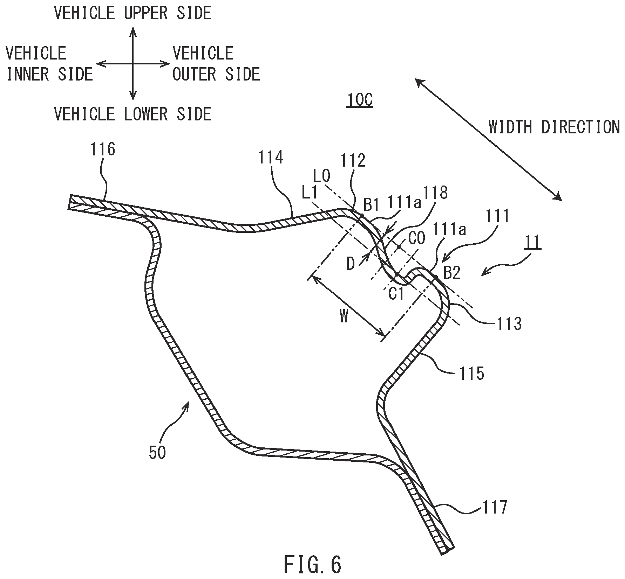

FIG. 6 is a transverse cross-sectional view of the pillar body 11 of an A-pillar upper outer 10C according to the fourth embodiment. In the present embodiment as well, the bead 118 is formed in the top plate 111 of the pillar body 11 at least in the area R1 (FIGS. 1 and 4) of 200 mm or more and 500 mm or less in the longitudinal direction from the front end portion 11e of the pillar body 11.

Similar to the third embodiment, in the transverse cross-sectional view of the pillar body 11 in the present embodiment, the bead 118 has an asymmetric shape with respect to the center line (width center line) of the bead 118 in the width direction of the pillar body 11. In the transverse cross-sectional view of the pillar body 11, the bead 118 has an asymmetric shape with respect to the width center line of the top plate 111 (a straight line passing through the width center C0 and perpendicular to the straight line L1). Note that, in the A-pillar upper outer 10C according to the present embodiment, the bottom center C1 of the bead 118 is located on the inner side of the curve relative to the width center C0 of the top plate 111, i.e., on the ridge line portion 113 side, which is the lower side relative to the vehicle body. The bottom center C1 of the bead 118 is, for example, shifted in the width direction by 10% or more of the width W of the top plate 111 from the width center C0 of the top plate 111. The depth D and length of the bead 118 can be set in the same manner as in the first embodiment.

The A-pillar upper outer 10C according to the present embodiment can also exhibit the same effect as the A-pillar upper outers 10, 10A, and 10B according to the other embodiments. Particularly, in the transverse cross-sectional view of the pillar body 11 in the present embodiment, the center C1 of the bottom portion of the bead 118 is located on the ridge line portion 113 side, i.e., the lower side relative to the vehicle body, with respect to the center C0 of the top plate 111 in the width direction of the pillar body 11. In this case, strain in the pillar body 11 is more easily distributed in the event of an automobile collision, further making the A-pillar upper outer 10C less likely to break.

### <Fifth Embodiment>

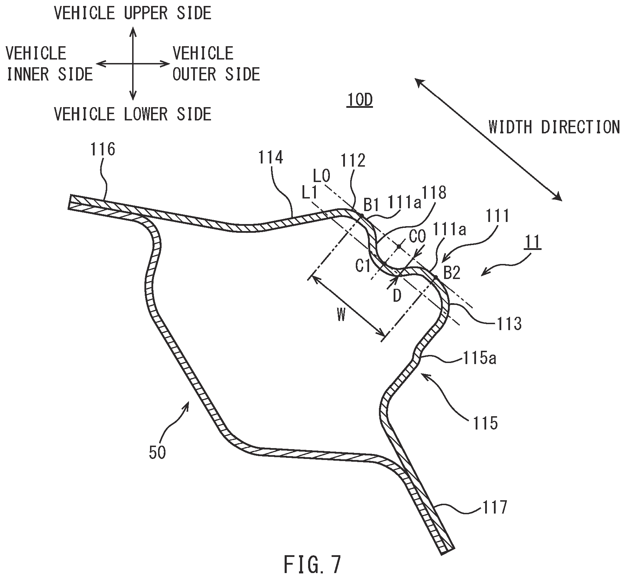

FIG. 7 is a transverse cross-sectional view of the pillar body 11 of an A-pillar upper outer 10D according to the fifth embodiment. In the present embodiment as well, the bead 118 is formed in the top plate 111 of the pillar body 11 at least in the area R1 (FIGS. 1 and 4) of 200 mm or more and 500 mm or less in the longitudinal direction from the front end portion 11e of the pillar body 11. In the present embodiment, the vertical wall 115 on the inner side of the curve has at least one step 115a, at least in the area R1. The step 115a is preferably provided in the vertical wall 115 over the entire area R1. The vertical wall 115 may have a step 115a beyond the area R1. This allows the cross-sectional line length of the pillar body 11 to be further extended in the area R1. This allows strain to be yet more easily distributed in the pillar body 11 in the event of an automobile collision, further making the A-pillar upper outer 10D less likely to break.

Although not shown, at least one step may be provided in the vertical wall 114 on the outer side of the curve, in addition to the vertical wall 115 on the inner side of the curve. Further, each of the vertical walls 114 and 115 may be provided with at least one bead in addition to or in place of the step.

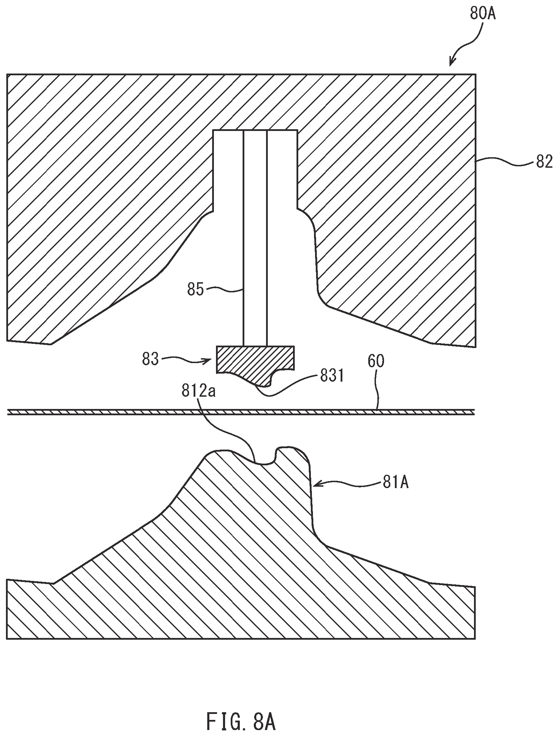

When the door ring structure 100 (FIG. 1) includes one of the A-pillar upper outers 10A to 10D according to the second to fifth embodiments, the door ring structure 100 can be produced using the same production method as the first embodiment. Note that the door ring structure 100 may alternatively be produce using a production method different from the first embodiment, as shown in FIGS. 8A to 8C.

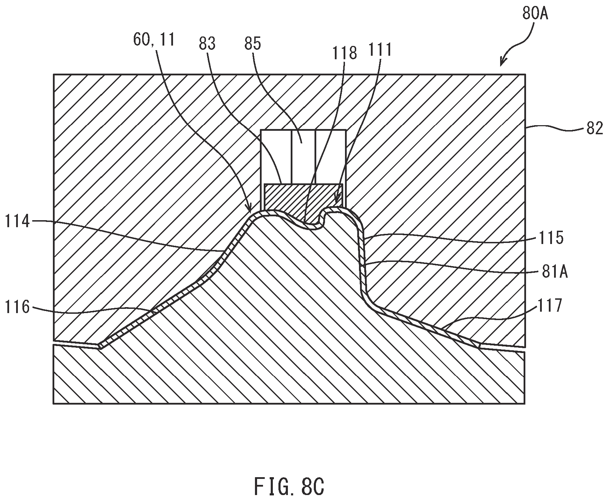

A method for producing the door ring structure 100 (FIG. 1) including the A-pillar upper outer 10C (FIG. 6) according to the fourth embodiment will be described with reference to FIGS. 8A to 8C. The production method shown in FIG. 8A and 8C includes the same preparation step and heating step as the first embodiment, but differs from the first embodiment in an aspect of the forming step. In the forming step, a die assembly 80A different from the die assembly 80 (FIG. 3C) of the first embodiment is used to form the heated blank 60 into the door ring structure 100 (FIG. 1) having an annular shape in a plan view, and quench it.

FIGS. 8A to 8C show transverse cross-sections of a portion of the die assembly 80A corresponding to the pillar body 11 (FIG. 6) of the A-pillar upper outer 10C. The die assembly 80A includes a punch 81A, the die 82, and the pad 83. The die assembly 80A differs from the die assembly 80 (FIG. 3C) of the first embodiment, mainly in the configuration of the punch 81A.

In the die assembly 80 of the first embodiment, the portion of the punch 81 for forming the pillar body 11 (FIG. 2) includes the cushion 812 (FIG. 3C) disposed such that it can be received in the punch body 811. In contrast, in the die assembly 80A, the portion of the punch 81A for forming the pillar body 11 (FIG. 6) does not include such a cushion. The punch 81A has a forming surface corresponding to the pillar body 11. The top surface of the punch 81A has a recess 812a for forming the bead 118.

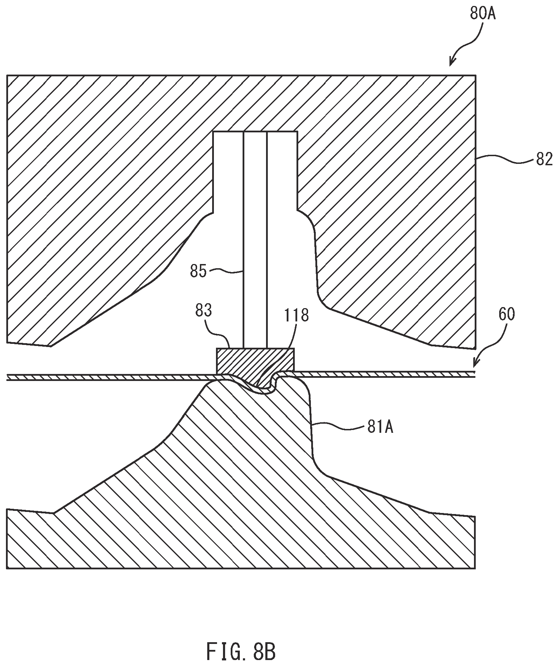

In the forming step, first, the blank 60 is disposed between the punch 81A and the die 82 and pad 83, as shown in FIG. 8A. Thereafter, the die 82 and the pad 83 are moved relative to the punch 81A in the pressing direction, and the die 82 and the pad 83 are brought close to the punch 81A. Thus, the blank 60 is first held between the pad 83 and the punch 81A. More specifically, as shown in FIG. 8B, the portion of the blank 60 that is to be formed into the top plate 111 (FIG. 6) of the pillar body 11 is held between the pad 83 and the punch 81A, and the bead 118 is formed in the blank 60.

Thereafter, as shown in FIG. 8C, the blank 60 is pressed by the punch 81A and the die 82 to form the vertical walls 114 and 115 and the flanges 116 and 117. More specifically, the punch 81A and the die 82 are relatively brought close to each other in the pressing direction while the blank 60 is held between the pad 83 and the punch 81A. As a result, the elastic member 85 contracts, and the die 82 moves toward the punch 81A relative to the pad 83. Then, the blank 60 is pressed by the punch 81A and the die 82 and formed into a shape conforming to the forming surface of the punch 81A. The blank 60 is kept in a state held between the punch 81A and the die 82 and pad 83. The blank 60 is subjected to heat removal (rapid cooling) by the die assembly 80A, and its microstructure is transformed into martensite. Although not shown, portions of the door ring structure 100 other than the pillar body 11 of the A-pillar upper outer 10C are also formed by the die assembly 80A including the punch 81A, the die 82, and the pad 83.

While FIGS. 8A to 8C illustrate an example of producing the door ring structure 100 (FIG. 1) including the A-pillar upper outer 10C according to the fourth embodiment, the door ring structure 100 including any of the A-pillar upper outers 10, 10A, 10B, and 10D according to the other embodiments can also be produced by the production method shown in FIGS. 8A to 8C. When producing the door ring structure 100 including any of the A-pillar upper outers 10 and 10A to 10D, for example, the angle of the A-pillar upper outer 10, 10A, 10B, 10C, or 10D relative to the pressing direction can be set as appropriate such that the bead 118 of the top plate 111, the vertical walls 114 and 115, and other portions do not include a region having a shape with a negative draft angle.

While the embodiments according to the present disclosure have been described so far, the present disclosure is not limited to the above embodiments, and various modifications are possible unless departing from the gist of the present disclosure.

The configurations of the A-pillar upper outers 10 and 10A to 10D according to the first to fifth embodiments may be combined as appropriate. For example, the step 115a in the vertical wall 115 of the A-pillar upper outer 10D according to the fifth embodiment may be applied to the A-pillar upper outers 10B and 10C according to the third and fourth embodiments. Further, for example, each of the A-pillar upper outers 10B to 10D according to the third to fifth embodiments may include the transition portion 12 in addition to the pillar body 11, similar to the A-pillar upper outer 10A according to the second embodiment, but need not necessarily include the transition portion 12, similar to the A-pillar upper outer 10 according to the first embodiment.

In the above embodiments, one bead 118 is formed in the top plate 111 of the pillar body 11 in the area R1 of 200 mm or more and 500 mm or less in the longitudinal direction from the front end portion 11e of the pillar body 11. However, the top plate 111 of the pillar body 11 may have two or more beads 118 arranged in the width direction at least in the area R1. In this case, the depth D of each bead 118 may be the same as or different from the depths D of the other beads 118. Also, the extension length of each bead 118 may be the same as or different from the extension lengths of the other beads 118.

In the above embodiment, the bead 118 has a curved shape protruding toward the inner side of the pillar body 11 (i.e., toward the A-pillar upper inner 50) in a transverse cross-section of the pillar body 11. However, the cross-sectional shape of the bead 118 is not limited thereto. For example, the bead 118 may alternatively have a polygonal shape such as a rectangular or trapezoidal shape in a transverse cross-section of the pillar body 11.

In the above embodiments, the annular blank 60, which is the material of the door ring structure 100, includes four steel sheets 61, 62, 63, and 64. However, the blank 60 may include two or three steel sheets forming an annular shape, or may include five or more steel sheets. The positions of joints between the steel sheets in the blank 60 and the door ring structure 100 can be changed as appropriate.

In the above embodiments, each of the plurality of steel sheets forming the annular blank 60 may be single-layered or multi-layered. That is, each of these steel sheets may be a sheet material formed of a single steel sheet, or a sheet material constituted by stacking a plurality of steel sheets.

In the above embodiments, the A-pillar upper outers 10 and 10A to 10D are produced by hot stamping. To ensure a sufficient depth D of the bead 118, the A-pillar upper outers 10 and 10A to 10D are preferably produced by hot stamping. However, the A-pillar upper outers 10 and 10A to 10D may alternatively be produced by cold forming. Further, in the above embodiments, each of the A-pillar upper outers 10 and 10A to 10D is press-formed integrally with the other frame members 20, 30, and 40. However, the A-pillar upper outers 10 and 10A to 10D may alternatively be press-formed separately from the other frame members 20, 30 and 40.

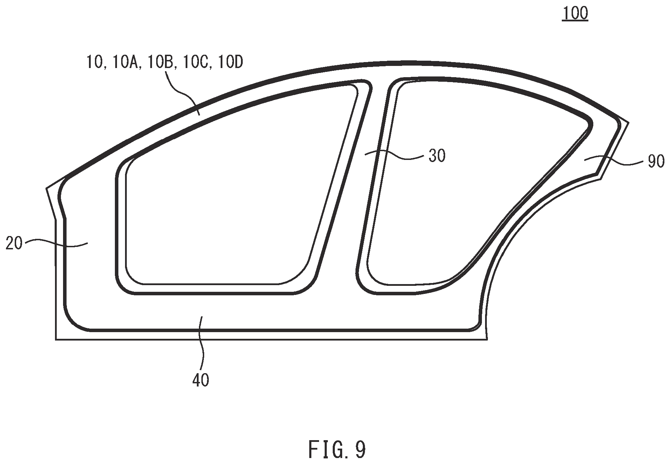

In the above embodiments, the door ring structure 100 includes any of the A-pillar upper outers 10 and 10A to 10D, the A-pillar lower outer 20, and the B-pillar outer 30 and the rocker outer 40. However, the door ring structure 100 may also include yet other components. For example, the door ring structure 100 may further include a C-pillar outer 90 as shown in FIG. 9. The door ring structure 100 according to the above embodiments has a single-ring shape. In contrast, the door ring structure 100 shown in FIG. 9 has a double-ring shape. In the case of integrally forming the door ring structure 100 having a double-ring shape, a blank to serve as its material also has a double-ring shape.

### EXAMPLES

The present disclosure will be described in more detail below by way of examples. However, the present disclosure is not limited to the following examples.

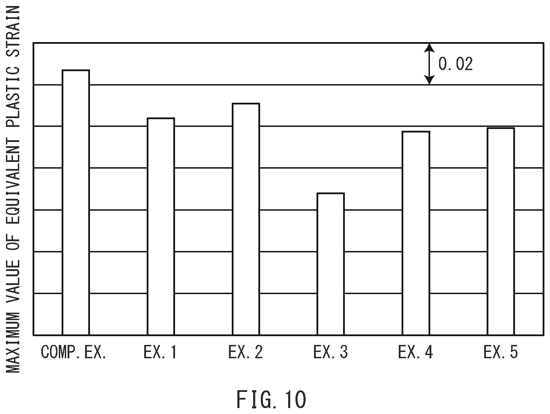

In order to confirm the effect of the present disclosure, CAE analysis was performed for the A-pillar upper outers described in the above embodiments using commercially available software (LS-DYNA R9.3.1, manufactured by Ansys, Inc.) while changing the conditions of the depth and bottom center position of the bead. Table 1 and FIG. 10 show the conditions and results of the analysis.

**[Table 1]**

| | Bead depth (mm) | Bead depth/ Sheet Thickness | Position of bead bottom center | Maximum value of equivalent plastic strain | |
|---|---|---|---|---|---|
| | | | | Reduction from Comp.Ex.(%) | Reduction from Ex.1(%) |
| Comp.Ex. | - | - | - | - | - |
| Ex.1 | 5.0 | 3.6 | Coincide with top plate width center | 18.1 | - |
| Ex.2 | 3.0 | 2.1 | Coincide with top plate width center | 12.7 | - |
| Ex.3 | 10.0 | 7.1 | Coincide with top plate width center | 46.6 | - |
| Ex.4 | 5.0 | 3.6 | Further downward than top plate width center relative to vehicle body | 23.2 | 6.2 |
| Ex.5 | 5.0 | 3.6 | Further upward than top plate width center relative to vehicle body | 21.9 | 4.7 |

In this analysis, based on the standards for the Small Overlap (SOL) frontal collision test of the Insurance Institute for Highway Safety (IIHS), the right end of a barrier surface was offset 25% of the vehicle width from the center line in the vehicle width direction to the left side of the vehicle body. The barrier surface was then made to collide with the vehicle body to which the A-pillar upper outer was attached, at a speed of 64.4 km/h. The equivalent plastic strain at that time was evaluated for a comparative example and examples 1 to 5 shown in Table 1. More specifically, for the comparative example and each example, the equivalent plastic strain was obtained at 2-mm intervals along a ridge line portion adjacent to the top plate on the lower side relative to the vehicle body in an area of 200 mm or more and 500 mm or less in the longitudinal direction from the front end portion of the pillar body. The maximum value of the obtained equivalent plastic strain was evaluated. A steel sheet having a tensile strength of 1470 MPa was used as the material for the A-pillar upper outer, and the sheet thickness of the steel sheet was 1.4 mm.

In the comparative example, no bead is provided in the top plate of the pillar body. Meanwhile, in examples 1 to 5, a bead is provided that extends in the longitudinal direction in the top plate of the pillar body over the entire area of 200 mm or more and 500 mm or less in the longitudinal direction from the front end portion of the pillar body. As shown in Table 1 and FIG. 10, it was confirmed that the maximum value of equivalent plastic strain was reduced in examples 1 to 5 compared to the comparative example. That is, by providing the bead in the top plate of the pillar body in the area of 200 mm or more and 500 mm or less in the longitudinal direction from the front end portion of the pillar body, it was possible to distribute the tensile strain in the ridge line portion on the inner side of the curve that is generated by deformation of the pillar body, in the event of SOL frontal collision.

In example 1 and 5, the deeper the bead, the smaller the maximum value of the equivalent plastic strain, as shown in Table 1 and FIG. 10. Compared to the comparative example, the maximum value of the equivalent plastic strain was reduced by 15.0% or more in examples 1 and 3 in which the depth of the bead was 3.0 times or more the 1.4-mm sheet thickness of the top plate, out of examples 1 to 3 in which the bead had a symmetric shape with respect to the width center line and the bottom center position of the bead coincided with the width center position of the top plate. In example 3 in which the depth of the bead was 5.0 times or more the sheet thickness of the top plate, the maximum value of the equivalent plastic strain was reduced by approximately 50% from the comparative example. Accordingly, it can be considered that the strain distributing effect is significantly exhibited when the depth of the bead is 3.0 times or more the sheet thickness of the top plate.

Comparing examples 1, 4, and 5 in which the ratio of the depth of the bead to the sheet thickness of the top plate was identical, the maximum values of the equivalent plastic strain in example 4 and 5, in which the bead had an asymmetric shape with respect to the width center line, and the bottom center position of the bead was shifted in the width direction from the width center position of the top plate, were smaller than the maximum value in example 1 in which the bottom center position of the bead coincided with the width center position of the top plate. Particularly, in example 4 in which the bottom center of the bead was located further downward than the width center of the top plate relative to the vehicle body, the maximum value of the equivalent plastic strain was smaller than that in example 5. Thus, in order to further distribute the strain, preferably, the bottom center of the bead is shifted from the width center of the top plate in the width direction of the pillar body. More preferably, the bottom center of the bead is shifted from the width center of the top plate downward relative to the vehicle body (i.e., toward the inner side of the curve of the pillar body).

In this analysis, the amount of ingress into a cabin during the SOL frontal collision test was also examined. The amount of ingress was measured with the position of the A-pillar lower outer joined to the A-pillar upper outer (i.e., the portion at which a front door hinge was attached). Table 2 shows the amount of ingress in examples 1, 4, and 5 (reduction compared to the amount of ingress in the comparative example).

**[Table 2]**

| | Bead depth (mm) | Bead depth/ Sheet Thickness | Position of bead bottom center | Reduction in amount of ingress from Comp.Ex.(mm) |
|---|---|---|---|---|
| Comp.Ex. | - | - | - | - |
| Ex.1 | 5.0 | 3.6 | Coincide with top plate width center | 0.1 |
| Ex.4 | 5.0 | 3.6 | Further downward than top plate width center relative to vehicle body | 3.4 |
| Ex.5 | 5.0 | 3.6 | Further upward than top plate width center relative to vehicle body | 1.2 |

As shown in Table 2, the amount of ingress was reduced in examples 1, 4 and 5 compared to the comparative examples. In examples 4 and 5 in which the bottom center position of the bead was shifted in the width direction from the width center position of the top plate in the A-pillar upper outer, the amount of ingress was further reduced than in example 1 in which the bottom center position of the bead coincided with the width center position of the top plate. The amount of ingress was further reduced in example 4 in which the bottom center of the bead is located further downward than the width center of the top plate relative to the vehicle body, than in example 5. Thus, from the standpoint of reducing the amount of ingress into the cabin as well, preferably, the bottom center of the bead is shifted from the width center of the top plate in the width direction of the pillar body. More preferably, the bottom center of the bead is shifted from the width center of the top plate downward relative to the vehicle body (i.e., toward the inner side of the curve of the pillar body).

### REFERENCE SIGNS LIST

10, 10A, 10B, 10C, 10D: A-pillar upper outer
11: Pillar body
11e: End portion
111: Top plate
112: Ridge line portion (first ridge line portion)
113: Ridge line portion (second ridge line portion)
114: Vertical wall (first vertical wall)
115: Vertical wall (second vertical wall)
115a: Step
116: Flange (first flange)
117: Flange (second flange)
118: Bead
60: Blank
80, 80A: Die assembly
81, 81A: Punch
811: Punch body
812: Cushion
82: Die
83: Pad
100: Door ring structure

## Claims

1. An A-pillar upper outer for an automobile, comprising:
a pillar body including: a top plate; a first vertical wall connected to the top plate via a first ridge line portion; a first flange connected to the first vertical wall on a side opposite to the top plate; a second vertical wall connected to the top plate via a second ridge line portion on a side opposite to the first vertical wall; and a second flange connected to the second vertical wall on a side opposite to the top plate, the pillar body being made of steel and having a tensile strength of 980 MPa or more,
the pillar body extending while forming a curve, where the first ridge line portion, the first vertical wall, and the first flange are located on an outer side of the curve, and the second ridge line portion, the second vertical wall, and the second flange are located on an inner side of the curve, and
the top plate having a bead formed in an area of 200 mm or more and 500 mm or less in a longitudinal direction of the pillar body from an end portion of the pillar body that is located forward when the A-pillar upper outer is incorporated into a vehicle body of an automobile, out of two end portions of the pillar body in the longitudinal direction, the bead having a shape recessed inward of the pillar body and extending in the longitudinal direction.

2. The A-pillar upper outer according to claim 1,
wherein the bead has a depth of 3.0 times or more a sheet thickness of the top plate.

3. The A-pillar upper outer according to claim 1,
wherein, in a transverse cross-sectional view of the pillar body, a center of a bottom portion of the bead is located at a position shifted from a center of the top plate, in a width direction of the pillar body.

4. The A-pillar upper outer according to claim 3,
wherein, in a transverse cross-sectional view of the pillar body, the center of the bottom portion of the bead is located on the second ridge line portion side with respect to the center of the top plate, in the width direction.

5. The A-pillar upper outer according to claim 1,
wherein, in a transverse cross-sectional view of the pillar body, the bead has a shape asymmetric with respect to a center line of the bead in a width direction of the pillar body.

6. The A-pillar upper outer according to claim 1,
wherein the second vertical wall has at least one step in the area of 200 mm or more and 500 mm or less in the longitudinal direction from the end portion of the pillar body.

7. A door ring structure for an automobile, comprising:
the A-pillar upper outer according to any one of claims 1 to 6.

8. A method for producing the door ring structure according to claim 7, the method comprising:
a preparation step of preparing a blank having an annular shape in a plan view;
a heating step of heating the blank to an austenite transformation finish temperature or higher; and
a forming step of forming the heated blank into the door ring structure using a die assembly, and performing quenching,
wherein the die assembly includes a punch, a die, and a pad,
a portion of the punch for forming the pillar body includes: a punch body; and a cushion facing the pad and capable of being received within the punch body, and
in the forming step, the bead is formed in the blank by holding a portion of the blank that is to be formed into the top plate between the pad and the cushion, and thereafter the blank is pressed by the punch body and the die while the blank is held between the pad and the cushion.

9. A method for producing the door ring structure according to claim 7, the method comprising:
a preparation step of preparing a blank having an annular shape in a plan view;
a heating step of heating the blank to an austenite transformation finish temperature or higher; and
a forming step of forming the heated blank into the door ring structure using a die assembly, and performing quenching,
wherein the die assembly includes a punch, a die, and a pad, and
in the forming step, the bead is formed in the blank by holding a portion of the blank that is to be formed into the top plate between the pad and the punch, and the first vertical wall, the second vertical wall, the first flange, and the second flange are formed by pressing the blank using the punch and the die.
